# EUROPEAN PATENT SPECIFICATION

(11) **EP 2 155 569 B1**
(45) Date of publication and mention of the grant of the patent: **26.12.2012**
(21) Application number: 08741626.9
(22) Date of filing: 11.04.2008
(51) Int. Cl.: B65D 19/02, B65D 19/44, B65D 85/76

(54) **TRANSPORT PALLET FOR TRANSPORTING A PLURALITY OF FOIL-RIPENED CHEESES**
TRANSPORTPALETTE FÜR DEN TRANSPORT MEHRERER IN FOLIE GEREIFTER KÄSE
PALETTE DE TRANSPORT POUR TRANSPORTER UNE PLURALITÉ DE FROMAGES AFFINÉS PRÉEMBALLÉS

(30) Priority: 20.04.2007 NL 1033725
(43) Date of publication of application: 24.02.2010
(73) Proprietor: Friesland Brands B.V., 3818 LE Amersfoort (NL)
(72) Inventor: VAN BEEM, Sybren, Bram, NL-7701 ME Dedemsvaart (NL)
(74) Representative: Hatzmann, Martin
(86) International application number: PCT/NL2008/050205
(87) International publication number: WO 2008/130227

(56) References cited:
- WO-A-2004/087513
- WO-A-2006/092816
- NL-A- 7 510 341
- NL-A- 8 200 949
- US-A- 4 120 443
- US-A1- 2003 042 163

## Description

The invention relates to a transport pallet for transporting a plurality of foil-ripened cheeses.

Herein, foil-ripened cheese ("foil cheese") is understood to mean a cheese that is not provided with a crust during production, but is produced in foil, for instance plastic, in which the cheese ripens. In general, the foil cheese is substantially rectangular. This offers the advantage, for instance, that the foil cheese can be stacked more compactly than the round cheese with crust, as an interstitial space between the substantially rectangular foil cheeses can remain limited.

The ripened foil cheeses can then be transported to the end user or distributors. It is known per se to transport foil cheeses on a transport pallet, for instance of the so-called euro-size (80 x 120 cm), a so-called euro-pallet, as, at least in Europe, this size is the standard size for road transport by means of trucks. To that end, the foil cheeses are stacked onto the transport pallet in a plurality of layers. However, this has the drawback that during transport, the foil cheeses can deform due to their own weight and possibly the weight of other foil cheeses present on the euro-pallet.

In addition, the euro size is not adapted to a size of the foil cheeses; a bearing surface of the euro pallet does not correspond to the surface of a whole number of foil cheeses. This means that if a largest possible number of foil cheeses are placed on the euro pallet, abutting against each other within outer contours of the euro pallet, a part of the bearing surface of the euro pallet will not be covered with foil cheese.

An object of the invention is to provide a transport pallet for transporting a plurality of foil cheeses, wherein at least a number of the above-mentioned drawbacks are met.

To that end, according to the invention, a transport pallet according to claim 1 is provided.

This offers the advantage that all foil cheeses on the transport pallet, in each layer of foil cheeses, can abut substantially sideways with their entire perimeter against another foil cheese and/or against the at least one upstanding inner wall and/or against at least one upstanding outer wall, so that deformation of the foil cheeses during transport is prevented, while a size of the substantially rectangular bearing surface needs not correspond to the surface of whole number of foil cheeses.

From WO 2004/087513, a container is known for drying blocks of cheese. The container comprises a base and four upstanding sidewalls. WO 2004/087513 sets forth that the size of the container can correspond to the size of a standard pallet, or that the size of the container can be adapted, so that a specified number of blocks of cheese of a predetermined weight or size can be stacked in the container. This described container therefore has the drawback that either the foil cheeses can deform under their own weight during transport and possibly the weight of the other foil cheeses present on the euro pallet, or that the container is not optimally adjusted to current sizes of transport pallets, for instance for European road transport.

From NL7510341, a storage and transport pallet is known with a construction thereon for displaying on the pallet the objects placed on the pallet, for instance in a store, and providing prize indications on the objects without unloading the separate objects from the pallet. However, in NL7510341, the size of the construction placed on the pallet is smaller than and independent of the size of the pallet. This described pallet is therefore not intended and also not suitable for placing a largest possible number of objects thereon. GB 2 022 986 A discloses a transport pallet according to the preamble of claim 1.

Preferably, the substantially rectangular bearing surface has substantially the size of a euro pallet. Preferably, the substantially rectangular bearing surface is formed by a euro pallet. This offers the advantage that the transport pallet is optimally adapted to current sizes of transport pallets, for instance for European road transport.

The size of the enclosed subsurface of the bearing surface substantially corresponds to the surface of N foil cheese, wherein N is defined as the whole number obtained by rounding down the bearing surface divided by the surface of one foil cheese.

Preferably, the at least one upstanding inner wall comprises a first upstanding inner wall and a second upstanding inner wall. Preferably, the first and second upstanding inner wall are placed such that they separate a substantially rectangular part of the bearing surface from the enclosed subsurface. Thus, on the transport pallet, a tubular structure can be formed by the inner walls and/or outer wall that enclose the separated rectangular part. Thus, the rigidity of a structure of a transport pallet formed by the upstanding walls is increased so that a deformation of the foil cheeses, for instance during transport, is further avoided.

The invention further relates to a method for manufacturing foil cheeses. According to the invention, the method comprises placing foil cheeses on a transport pallet according to the invention. Thus, the transport pallet according to the invention is advantageously deployed in the manufacture of foil cheeses.

Preferably, the foil cheeses are placed on the transport pallet in at least one layer of foil cheeses, wherein all foil cheeses of the at least one layer abut substantially sideways with their entire perimeter against another foil cheese and/or against the at least one upstanding inner wall and/or against at least one upstanding outer wall. Thus, deformation of the foil cheeses on the transport pallet is avoided.

Preferably, the method further comprises ripening of the foil cheeses on the transport pallet and transporting the foil cheeses to, for instance, an end user or distributor, on the transport pallet. Thus, already during ripening of the foil cheeses, the foil cheeses are prevented from deforming, and it is therefore not necessary to use a separate moulding box for ripening the foil cheeses and a separate transport pallet for transporting the foil cheeses. It is therefore further not necessary to repack the foil cheeses from the moulding box onto the transport pallet before transport of the foil cheeses to, for instance, the end user or the distributor. With this, costs for, for instance, storing moulding boxes and transport pallets, as well as repacking foil cheeses, can be limited.

Presently, the invention will be explained in further detail, by way of non-limitative example, on the basis of the drawing. In the drawing:
Fig. 1 shows a schematic top plan view of a first embodiment of a transport pallet according to the invention;
Fig. 2 schematically shows a perspective view of the transport pallet shown in Fig. 1, and;
Fig. 3 shows a schematic top plan view of a second embodiment of a transport pallet according to the invention.

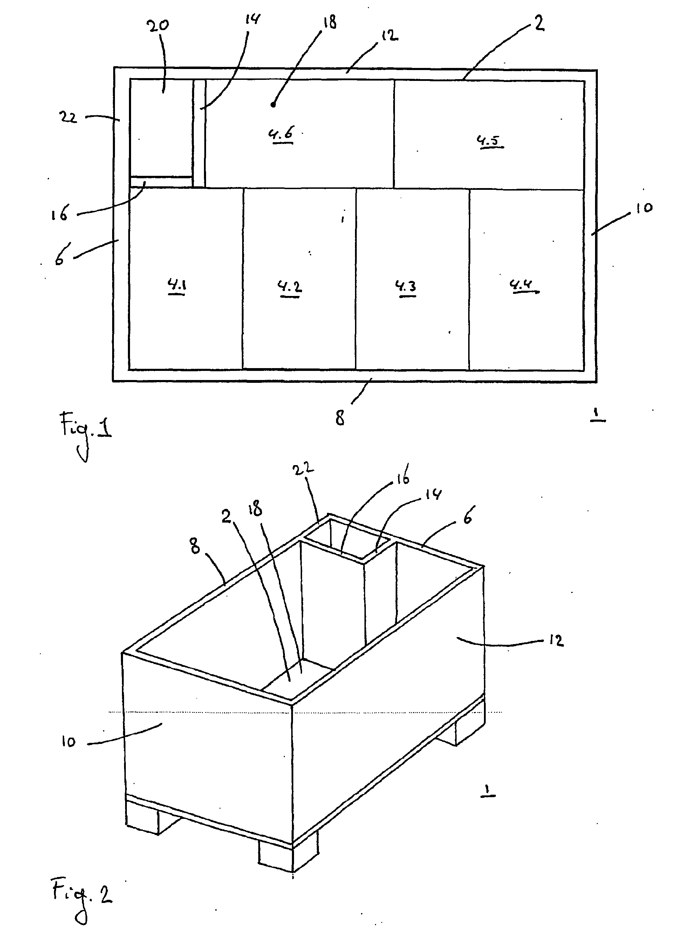

Fig. 1 shows a schematic top plan view of a first embodiment of a transport pallet 1 for transporting a plurality of foil cheeses according to the invention. Fig. 2 schematically shows a perspective view of the transport pallet 1 shown in Fig. 1.

The transport pallet 1 comprises a substantially rectangular bearing surface 2. In use, a plurality of foil cheese 4.i (i=1,2,3...) is placed on the bearing surface 2. In this example, the bearing surface 2 has the size of a euro pallet, viz. approximately 80 cm wide and 120 cm long. It is for instance possible that the bearing surface is formed by a top side of a euro pallet, for instance a wooden or plastic euro pallet.

In the example of Fig. 1, foil cheeses 4.i are shown with a size of approximately 30 cm wide and 50 cm long. In the example of Fig. 1, it therefore holds that a size of the bearing surface 2 does not correspond to the surface of a whole number of foil cheeses 4.i. It is therefore not possible to place a whole number of entire foil cheeses 4.i on the bearing surface 2 abutting against each other such that the entire bearing surface is filled with foil cheeses. A part of the bearing surface 2 will therefore not be covered with a foil cheese 4.i.

In Fig. 1 and Fig. 2, the transport pallet 1 is further provided with upstanding outer walls 6, 8, 10, 12. The upstanding outer walls 6, 8, 10, 12 extend on the perimeter of the bearing surface 2. Therefore, in this example, the bearing surface 2 and the upstanding walls 6, 8, 10, 12 form a substantially rectangular box with an open top side.

In Figs. 1 and 2, the transport pallet is further provided with a first upstanding inner wall 14 and a second upstanding inner wall 16. The upstanding inner walls 14, 16 extend above the bearing surface 2. In Fig. 1 it can be seen that the upstanding inner walls 14, 16 are positioned relative to the upstanding outer walls 6, 8, 10, 12 such that a size of a subsurface 18 enclosed by the upstanding inner walls 14, 16 and the upstanding outer walls 6, 8, 10, 12 substantially corresponds to the surface of a whole number of foil cheeses 4.i, in this example to the surface of six foil cheeses. It will be clear that thus, the enclosed subsurface 18 substantially corresponds to the surface of the largest possible whole number of foil cheeses that can be placed on the bearing surface 2. The enclosed subsurface therefore substantially corresponds to the surface of N foil cheeses, whereby N is defined as the whole number obtained by rounding down the bearing surface divided by the surface of one foil cheese. In this example, the upstanding inner walls 14, 16 therefore separate a substantially rectangular part 20 of the bearing surface 2 from the enclosed subsurface 18. Thus, a tubular structure 22 is formed by the inner walls 14, 16 and the outer walls 6, 12 that enclose the separated part 20. Thus, the rigidity of a structure of the transport pallet 1 formed by the upstanding walls 6 - 16 is increased, thereby preventing the foil cheeses 4.i from deforming, for instance during transport.

In the example of Figs. 1 and 2, the upstanding inner walls 14, 16 are detachably connected to the outer walls 12 and 6, respectively, by means of, for instance, screws.

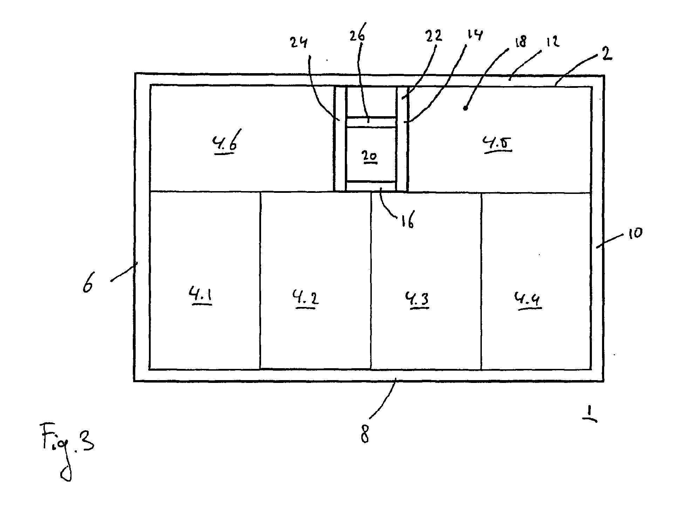

Fig. 3 shows a schematic top plan view of a second embodiment of a transport pallet 1 according to the invention. The transport pallet 1 shown in Fig. 3 substantially corresponds to the transport pallet shown in Figs. 1 and 2. The transport pallet in Fig. 3 is provided with a bearing surface 2 and upstanding outer walls 6, 8, 10, 12 which extend on the perimeter of the bearing surface 2.

In the example of Fig. 3, the transport pallet is also provided with the first upstanding inner wall 14 and the second upstanding inner wall 16 and further with a third upstanding inner wall 24. The upstanding inner walls 14, 16, 24 extend above the bearing surface 2. In Fig. 3, it can be seen that the upstanding inner walls 14, 16, 24, are positioned relative to the upstanding outer walls 6, 8, 10, 12 such that the size of the subsurface 18 of the bearing surface enclosed by the upstanding inner walls 14, 16, 24 and the upstanding outer walls 6, 8, 10, 12 substantially corresponds to the surface of a whole number of foil cheeses 4.i, in this example six foil cheeses. In the example of Fig. 3, the upstanding inner walls 14, 16, 24 separate the substantially rectangular part 20 of the bearing surface 2 from the enclosed subsurface 18. Thus, in Fig. 3, the tubular structure 22 is formed by the inner walls 14, 16, 24 and the outer wall 12 which encloses the separated part 20. Thus, the rigidity of the structure of the transport pallet 1 formed by the upstanding walls 6 - 16, 24 is increased, so that a deformation of the foil cheeses 4.i, for instance during transport, is prevented.

In the example of Fig. 3, the transport pallet is further provided with a reinforcing wall 26 which extends between the first upstanding inner wall 14 and the third upstanding inner wall 24. In use, the reinforcing wall 26 can prevent the first and third inner wall 14, 24 from being pressed together through deformation of the foil cheeses, so that deformation of the foil cheeses is efficiently prevented. Utilizing the reinforcing wall 26 may for instance be of value if the upstanding inner walls abut loosely against the upstanding outer wall(s), i.e. are not connected to the outer wall(s) by mechanical connecting means. It will be clear that the reinforcing wall 26 can also be utilized in the embodiment shown in Figs. 1 and 2, wherein the reinforcing wall 26 extends, for instance, between the first upstanding inner wall 14 and the upstanding outer wall 6.

The transport pallet for transporting foil cheeses 4.i described so far on the basis of Figs. 1 - 3 can be utilized as follows when manufacturing foil cheeses.

When producing foil cheeses 4.i, an amount of cheese is brought into a substantially rectangular shape and is packed in a foil, for instance a gas permeable plastic foil. A first plurality of foil cheeses 4.i is then placed in a first layer onto the bearing surface 2 of the transport pallet 1, so that the entire subsurface 18 enclosed by the upstanding inner walls and outer walls is covered with foil cheeses. Here, it holds that all foil cheeses of the first layer on the transport pallet 1 abut substantially sideways with their entire perimeter against another foil cheese of the first layer and/or against at least one upstanding inner wall and/or against at least one upstanding outer wall. Thus, all foil cheeses 4.i of the first layer are confined sideways such that deformation of the foil cheeses 4.i on the transport pallet is prevented. Then, in a similar manner, a second layer of foil cheeses can be placed on the first layer of foil cheeses, optionally followed by one or more further layers of foil cheeses. It will be clear that it is possible to cover the foil cheeses in the transport pallet at a top side thereof, for instance with a lid (not shown) of the transport pallet.

It is also possible that between two layers of foil cheeses 4.i, a partition plate is arranged in the transport pallet. The partition plate can be manufactured from, for instance, wood, plastic, metal, cardboard or other fibrous material. A form and size of the partition plate preferably substantially corresponds to the shape and size of the subsurface 18, so that the partition plate abuts against substantially the entire top side and bottom side, respectively, of the layers of foil cheeses below and above the partition plate. The partition plate may be relevant when, otherwise, the foil cheeses tend to deform too much through, for instance, gas formation (for instance foil cheeses of the Maasdam type).

Thereupon, if desired, the foil cheese placed on the transport pallet can ripen. The transport pallet with the foil cheeses placed thereon can then be transported, for instance with the aid of a truck, to, for instance, an end user or distributor. The transport pallet 1 according to the invention can therefore be utilized both in a cheese factory for ripening of the foil cheeses on the transport pallet, and in (road) transport of the foil cheeses.

The invention is not limited in any manner to the embodiments described hereinabove. For instance, it is possible that the upstanding inner walls are permanently connected to the outer walls. It is also possible that the upstanding inner walls abut loosely against at least one outer wall.

In the examples, the tubular structure 22 is formed by an assembly of inner walls and at least one outer wall. It is also possible that the tubular structure is formed by only inner walls. Then, the tubular structure stands clear of the outer walls. This may be advantageous with foil cheeses of specific sizes.

In the examples, the separated part 20 is substantially rectangular, as the foil cheeses are substantially rectangular. If the foil cheeses have a different shape, compactly stackable, for instance a wedge shape, the separated part can also have a different form than substantially rectangular, for instance substantially triangular.

It is possible that the transport pallet is provided with a provision for allowing a second, similar or identical, transport pallet to be placed on top of the transport pallet, preferably during transport. To this end, the lid may for instance be provided, or a support.

The upstanding inner walls and/or outer walls can be manufactured from, for instance, wood, fibrous material, plastic, metal or a combination thereof.

All such variants are understood to fall within the framework of the invention.

## Claims

1. A transport pallet (1) for transporting a plurality of foil cheeses (4.i), comprising a rectangular bearing surface (2) having a plurality of foil cheeses placed thereon, wherein a size of the bearing surface does not correspond to the surface of a whole number of foil cheeses, wherein the transport pallet is further provided with upstanding outer walls (6, 8, 10, 12) on the perimeter of the bearing surface,
wherein the transport pallet is further provided with at least one upstanding inner wall (14, 16, 24) which extends above the bearing surface,
**characterized in that** the at least one upstanding inner wall is positioned relative to the upstanding outer walls such that it separates the bearing surface into a first subsurface (20) and a second subsurface (18), wherein a size of the second subsurface (18) corresponds to the combined surface of the largest possible whole number of foil cheeses that can be placed on the bearing surface.

2. A transport pallet (1) according to claim 1, wherein the substantially rectangular bearing surface (2) has the size of a euro pallet.

3. A transport pallet (1) according to claim 1 or 2, wherein the rectangular bearing surface (2) is formed by the bearing surface of a euro pallet.

4. A transport pallet (1) according to any one of the preceding claims, wherein the at least one upstanding inner wall (14, 16, 24) comprises a first upstanding inner wall and a second upstanding inner wall.

5. A transport pallet (1) according to claim 4, wherein the first and second upstanding inner wall (14, 16, 24) are placed such that they separate a, for instance rectangular, part of the bearing surface from the enclosed subsurface.

6. A transport pallet (1) according to any one of the preceding claims, wherein the at least one upstanding inner wall (14, 16, 24) is detachably connected to at least one outer wall (6, 8, 10, 12).

7. A transport pallet (1) according to any one of the claims 1 - 5, wherein the at least one inner wall (14, 16, 24) abuts loosely against at least one outer wall (6, 8, 10, 12).

8. A transport pallet (1) according to any one of the claims 1 - 5, wherein at least one of the at least one upstanding inner wall (14, 16, 24) stands clear of the outer walls (6, 8, 10, 12).

9. A transport pallet (1) according to any one of the preceding claims, wherein the at least one upstanding inner wall (14, 16_{,} 24) comprises a plurality of upstanding inner walls which stand clear of the outer walls and which are placed such that they separate a, for instance rectangular, part of the bearing surface, from the enclosed subsurface.

10. A method for manufacturing foil cheeses (4.i), comprising placing the foil cheeses on the transport pallet (1) according to any one of the preceding claims.

11. A method according to claim 10, wherein the foil cheeses (4.i) are placed on the transport pallet (1) in at least one layer of foil cheeses, wherein all foil cheeses of the at least one layer abut substantially sideways with their entire perimeter against another foil cheese and/or against the at least one upstanding inner wall (14, 16, 24) and/or against one upstanding outer wall (6, 8, 10, 12).

12. A method according to claim 10 or 11, further comprising ripening the foil cheeses (4.i) on the transport pallet (1).

13. A method according to any one of claims 10 - 12, further comprising transporting the foil cheeses (4.i) to, for instance, an end user or distributor, on the transport pallet (1).

## Patentansprüche

1. Transportpalette (1) für den Transport mehrerer Folienkäse (4.i), umfassend eine rechteckige Auflagefläche (2), auf die mehrere Folienkäse gelegt sind, wobei die Größe der Auflagefläche nicht der Größe einer ganzen Zahl von Folienkäsen entspricht, wobei die Transportpalette ferner mit aufrechten Außenwänden (6, 8, 10, 12) auf dem Umfang der Auflagefläche versehen ist,
wobei die Transportpalette ferner mit mindestens einer aufrechten Innenwand (14, 16, 24) versehen ist, die sich über der Auflagefläche erstreckt,
**dadurch gekennzeichnet, dass** die mindestens eine aufrechte Innenwand in Bezug auf die aufrechten Außenwände so positioniert ist, dass sie die Auflagefläche in eine erste Teilfläche (20 und eine zweite Teilfläche (18) trennt, wobei eine Größe der zweiten Teilfläche (18) der kombinierten Fläche der größtmöglichen ganzen Zahl von Folienkäsen, die auf die Auflagefläche gelegt werden können, entspricht.

2. Transportpalette (1) nach Anspruch 1, wobei die im Wesentlichen rechteckige Auflagefläche (2) die Größe einer Europalette hat.

3. Transportpalette (1) nach Anspruch 1 oder 2, wobei die rechteckige Auflagefläche (2) durch die Auflagefläche einer Europalette gebildet wird.

4. Transportpalette (1) nach einem der vorhergehenden Ansprüche, wobei die mindestens eine aufrechte Innenwand (14, 16, 24) eine erste aufrechte Innenwand und eine zweite aufrechte Innenwand enthält.

5. Transportpalette (1) nach Anspruch 4, wobei die erste und zweite aufrechte Innenwand (14, 16, 24) so angeordnet sind, dass sie einen beispielsweise rechteckigen Teil der Auflagefläche von der umschlossenen Teilfläche trennen.

6. Transportpalette (1) nach einem der vorhergehenden Ansprüche, wobei die mindestens eine aufrechte Innenwand (14, 16, 24) abnehmbar mit mindestens einer Außenwand (6, 8, 10, 12) verbunden ist.

7. Transportpalette (1) nach einem der Ansprüche 1-5, wobei wenigstens eine Innenwand (14, 16, 24) lose gegen wenigstens eine Außenwand (6, 8, 10, 12) ansteht.

8. Transportpalette (1) nach einem der Ansprüche 1-5, wobei mindestens eine der mindestens einen aufrechten Innenwand (14, 16, 24) abgetrennt von den Außenwänden (6, 8, 10, 12) steht.

9. Transportpalette (1) nach einem der vorhergehenden Ansprüche, wobei die mindestens eine aufrechte Innenwand (14, 16, 24) mehrere aufrechte Innenwände umfasst, die abgetrennt von den Außenwänden stehen und die so angeordnet sind, dass sie einen beispielsweise rechteckigen Teil der Auflagefläche von der eingeschlossenen Teilfläche trennen.

10. Verfahren zur Herstellung in Folie gereifter Käse (4.i), umfassend das Legen der Folienkäse auf die Transportpalette (1) nach einem der vorhergehenden Ansprüche.

11. Verfahren nach Anspruch 10, wobei die Folienkäse (4.i) in mindestens einer Schicht von Folienkäsen auf die Transportpalette (1) gelegt werden, wobei alle Folienkäse der mindestens einen Schicht seitlich mit ihrem ganzen Umfang gegen einen anderen Folienkäse und/oder gegen die mindestens eine aufrechte Innenwand (14, 16, 24) und/oder gegen eine aufrechte Außenwand (6, 8, 10, 12) stoßen.

12. Verfahren nach Anspruch 10 oder 11, ferner umfassend das Reifen der Folienkäse (4.i) auf der Transportpalette (1).

13. Verfahren nach einem der Ansprüche 10-12, ferner umfassend das Transportieren der Folienkäse (4.i) auf der Transportpalette (1) zu beispielsweise einem Endbenutzer oder Großhändler.

## Revendications

1. Palette de transport (1) destinée à transporter une pluralité de fromages enveloppés de papier (4.i), comprenant une surface portante rectangulaire (2) sur laquelle sont placés une pluralité de fromages enveloppés de papier, dans laquelle une taille de la surface portante ne correspond pas à la surface d'un nombre entier de fromages enveloppés de papier, dans laquelle la palette de transport est en outre dotée de parois extérieures verticales (6, 8, 10, 12) sur le périmètre de la surface portante ;
dans laquelle la palette de transport est en outre dotée d'au moins une paroi intérieure verticale (14, 16, 24) qui s'étend au-dessus de la surface portante ;
**caractérisée en ce que** la au moins une paroi intérieure verticale est positionnée par rapport aux parois extérieures verticales de telle sorte qu'elle sépare la surface portante en une première surface secondaire (20) et en une deuxième surface secondaire (18), dans laquelle une taille de la deuxième surface secondaire (18) correspond à la surface combinée du plus grand nombre entier possible de fromages enveloppés de papier pouvant être placés sur la surface portante.

2. Palette de transport (1) selon la revendication 1, dans laquelle la surface portante rectangulaire (2) a la taille d'une palette Europe.

3. Palette de transport (1) selon la revendication 1 ou 2, dans laquelle la surface portante rectangulaire (2) est formée par la surface portante d'une palette Europe.

4. Palette de transport (1) selon l'une quelconque des revendications précédentes, dans laquelle la au moins une paroi intérieure verticale (14, 16, 24) comprend une première paroi intérieure verticale et une deuxième paroi intérieure verticale.

5. Palette de transport (1) selon la revendication 4, dans laquelle les première et deuxième parois intérieures verticales (14, 16, 24) sont placées de telle sorte qu'elles séparent une partie de la surface portante, par exemple rectangulaire, de la surface secondaire entourée.

6. Palette de transport (1) selon l'une quelconque des revendications précédentes, dans laquelle la au moins une paroi intérieure verticale (14, 16, 24) est connectée de manière amovible à au moins une paroi extérieure (6, 8, 10, 12).

7. Palette de transport (1) selon l'une quelconque des revendications 1 à 5, dans laquelle la au moins une paroi intérieure (14, 16, 24) vient en butée sans serrer contre au moins une paroi extérieure (6, 8, 10, 12).

8. Palette de transport (1) selon l'une quelconque des revendications 1 à 5, dans laquelle l'une au moins de la au moins une paroi intérieure verticale (14, 16, 24) se dresse dégagée des parois extérieures (6, 8, 10, 12).

9. Palette de transport (1) selon l'une quelconque des revendications précédentes, dans laquelle la au moins une paroi intérieure verticale (14, 16, 24) comprend une pluralité de parois intérieures verticales qui se dressent dégagées des parois extérieures et qui sont placées de telle sorte qu'elles séparent une partie de la surface portante, par exemple rectangulaire, de la surface secondaire entourée.

10. Procédé de fabrication de fromages enveloppés de papier (4.i), comprenant le placement des fromages enveloppés de papier sur la palette de transport (1) selon l'une quelconque des revendications précédentes.

11. Procédé selon la revendication 10, dans lequel les fromages enveloppés de papier (4.i) sont placés sur la palette de transport (1) en au moins une couche de fromages enveloppés de papier, dans lequel tous les fromages enveloppés de papier de la au moins une couche viennent en butée sensiblement sur le côté, tout leur périmètre se trouvant contre un autre fromage enveloppé de papier et/ou contre la au moins une paroi intérieure verticale (14, 16, 24) et/ou contre une paroi extérieure verticale (6, 8, 10, 12).

12. Procédé selon la revendication 10 ou 11, comprenant en outre l'affinage des fromages enveloppés de papier (4.i) sur la palette de transport (1).

13. Procédé selon l'une quelconque des revendications 10 à 12, comprenant en outre le transport des fromages enveloppés de papier (4.i) vers un utilisateur final ou un distributeur, par exemple, sur la palette de transport (1).
